# EUROPEAN PATENT APPLICATION

(11) **EP 2 322 794 A2**
(43) Date of publication of application: **18.05.2011**
(21) Application number: 10167418.2
(22) Date of filing: 25.06.2010
(51) Int. Cl.: F03D 7/02

(54) **Miniature wind turbine having variable blade pitch**

(30) Priority: 13.11.2009 HK 09110675; 10.06.2010 US 813283
(71) Applicant: Jointiff Limited, Yen Ying Building Wan chai Hong Kong (CN)
(72) Inventor: Poon, Ming Tak, Wan Chai, Hong Kong (CN)
(74) Representative: Andrews, Martyn Peter

(57) **Abstract**

A wind turbine rotor having variable blade pitch is provided. According to one embodiment, the wind turbine rotor includes a hub defining a predetermined number of openings, the hub further including a rotatable adjustment layer defining a predetermined number of slots, wherein the slots corresponds to the openings; and one or more blades secured in the hub, each of the one or more blades including a blade root, and a protrusion extending from the blade root, and wherein the protrusion of each of the one or more blades is engaged by a corresponding slot of the adjustment layer, wherein rotation of the adjustment layer translates the protrusions of each of the one or more blades, thereby rotating each of the one or more blades about the longitudinal axis. The rotor may be removably secured to a generator shaft by a spring, allowing easy adjustment of the rotor for educational use.

## Description

### FIELD OF THE INVENTION

The present invention relates to a wind turbine, and more particularly, to a miniature wind turbine rotor having variable blade pitch.

### BACKGROUND OF THE INVENTION

A wind turbine works to convert wind into electric energy by using blades to generate rotational motion. The rotational motion is then converted into energy that can be stored or used for any desired application. The parameters of the blades used in a wind turbine play a key role for the wind turbine. As wind turbines are becoming more important in global efforts to use green energy sources, the study of wind turbines and understanding what factors affect energy generation is becoming more important at schools and universities. It can be especially important to understand the relationship between various parameters of the blades and the power generated by the wind turbine.

Toy wind turbines and miniature wind turbines are currently known. However, these existing devices do not allow many adjustments or any adjustment at all, and therefore, they are not well suited for educational purposes. Accordingly, there is a need for a miniature wind turbine having variable blade pitch that solves these and other shortcomings of known miniature wind turbines.

### SUMMARY OF THE INVENTION

According to one aspect of the present invention, a wind turbine rotor having variable blade pitch is disclosed. The wind turbine rotor includes a hub defining a predetermined number of openings, the hub further including a rotatable adjustment layer defining a predetermined number of slots, wherein the slots corresponds to the openings; and one or more blades secured in the hub, each of the one or more blades including a blade root, and a protrusion extending from the blade root, each of the one or more blades defining a longitudinal axis along each of the one or more blades, wherein the blade root of each of the one or more blades is secured in a corresponding one of the openings, the blade root rotatable within the corresponding one of the openings, and wherein the protrusion of each of the one or more blades is engaged by a corresponding slot of the adjustment layer, wherein rotation of the adjustment layer translates the protrusions of each of the one or more blades, thereby rotating each of the one or more blades about the longitudinal axis.

According to one embodiment the one or more blades are removably secured in the hub. The hub may include a base opening and a spring configured to receive a generator shaft, the generator shaft including a flat portion, and wherein the spring includes an arm configured to engage the flat portion of the generator shaft and rotationally secure the hub to the generator shaft.

According to another aspect of the present invention, a wind turbine rotor having variable blade pitch is disclosed. The wind turbine rotor includes a hub base having a column and a base rim; a securing layer positioned on the column of the hub base; a blade pitch adjustment layer positioned on the column of the hub base and rotatable relative to the hub base, the blade pitch adjustment layer defining a plurality of slots along a perimeter of the blade pitch adjustment layer; and one or more blades secured between the hub base and the securing layer, each of the one or more blades including a blade root, a blade body, and a protrusion extending from the blade root, each of the one or more blades defining a longitudinal axis along each of the one or more blades, wherein the blade root of each of the one or more blades is secured between the hub base and the securing layer, each of the blade roots rotatable between the hub base and the securing layer, and wherein the protrusion of each of the one or more blades is engaged by a corresponding slot of the blade pitch adjustment layer, wherein rotation of the blade pitch adjustment layer translates each of the protrusions of the one or more blades thereby rotating each of the one or more blades about the longitudinal axis.

The wind turbine may include a locking layer, the locking layer configured for threaded engagement with the column, wherein the locking layer secures the securing layer and the blade pitch adjustment layer on the column of the hub base.

The wind turbine rotor may include a first locking layer and a second locking layer, the first locking layer configured for threaded engagement with the column, wherein the first locking layer secures the securing layer and the blade pitch adjustment layer on the column of the hub base, and the second locking layer is configured for threaded engagement with the column, wherein the second locking layer secures the first locking layer to the column.

According to another embodiment, the blade pitch adjustment layer includes an indicator marking and the securing layer includes gradation markings corresponding to the indicator markings, such that the indicator markings and the gradation markings cooperate to indicate the blade pitch angle of the blades as the blade pitch adjustment layer is rotated relative to the securing layer.

According to another aspect, the present invention disclosesa wind turbine rotor hub having variable blade pitch control, the wind turbine rotor hub configured to receive one or more blades, each of the one or more blades having a protrusion located proximate to an end of the one or more blades. The wind turbine rotor hub includes a hub base having a column and a base rim; a securing layer positioned on the column of the hub base; a blade pitch adjustment layer positioned on the column of the hub base and rotatable relative to the hub base, the blade pitch adjustment layer defining a plurality of slots along a perimeter of the blade pitch adjustment layer; a locking layer configured to secure the blade pitch adjustment layer to the hub base, wherein the securing of the blade pitch adjustment layer restricts the rotation motion of the blade pitch adjustment layer; and wherein the hub base and the securing layer together define a predetermined number of openings configured to receive a part of one of the one or more blades, and wherein the blade pitch adjustment layer is configured to engage the protrusion of each of the one or more blades when the part of each of the one or more blades is positioned in one of the predetermined openings.

Still other embodiments of the present invention will become readily apparent to those skilled in the art from the following detailed description, wherein embodiments of the invention are described by way of illustration. As will be realized, the invention is capable of other and different embodiments and its several details are capable of modifications in various respects, all without departing from the spirit and the scope of the present invention.

### BRIEF DESCRIPTION OF THE DRAWINGS

FIG. 1 is a rear perspective view a miniature wind turbine, in accordance with an embodiment of the present invention.

FIG. 2 is a partial exploded perspective view of the wind turbine shown in FIG. 1, in accordance with an embodiment of the present invention.

FIG. 3 is an exploded perspective view of the wind turbine nacelle showing a mounting of the generator, in accordance with an embodiment of the present invention.

FIG. 4 is an exploded perspective view of the wind turbine rotor, in accordance with an embodiment of the present invention.

FIG. 5A is a top perspective view of the hub base, in accordance with an embodiment of the present invention.

FIG. 5B is a bottom perspective view of the hub base shown in FIG. 5A, in accordance with an embodiment of the present invention.

FIG. 5C is a first view of the hub base shown in FIG. 5A, in accordance with an embodiment of the present invention.

FIG. 5D is a second view of the hub base shown in FIG. 5A, in accordance with an embodiment of the present invention.

FIG. 6 is a top view of the hub base shown in FIG. 5A, in accordance with an embodiment of the present invention.

FIG. 7 is an enlarged view of a spring shown in FIG. 6, in accordance with an embodiment of the present invention.

FIG. 8 is a cross sectional view of the hub base shown in FIG. 5A, in accordance with an embodiment of the present invention.

FIG. 9 is a further enlarged view of the spring shown in FIG. 7, in accordance with an embodiment of the present invention.

FIG. 10 is a cross sectional view taken along line A-A of the hub base shown in FIG. 6, in accordance with one embodiment of the present invention.

FIG. 11 is a front view of the securing layer, in accordance with an embodiment of the present invention.

FIG. 12 is a side view of the securing layer, in accordance with an embodiment of the present invention.

FIG. 13 is a rear perspective view of the blade pitch adjustment layer, in accordance with an embodiment of the present invention.

FIG. 14 is a front perspective view of the blade pitch adjustment layer shown in FIG. 13, in accordance with an embodiment of the present invention.

FIG. 15A is a side view of the blade pitch adjustment layer shown in FIG. 13, in accordance with an embodiment of the present invention.

FIG. 15B is a rear view of the blade pitch adjustment layer shown in FIG. 13, in accordance with an embodiment of the present invention.

FIG. 15C is a front view of the blade pitch adjustment layer shown in FIG. 13, in accordance with an embodiment of the present invention.

FIG. 16A is a perspective view of the blade, in accordance with an embodiment of the present invention.

FIG. 16B is a side view of the blade shown in FIG. 16A, in accordance with an embodiment of the present invention.

FIG. 17 is an end view of the blade shown in FIG. 16A, in accordance with an embodiment of the present invention.

FIG. 18 is a cross sectional view of the locking layer, in accordance with an embodiment of the present invention.

FIG. 19 is a rear view of the locking layer, in accordance with an embodiment of the present invention.

FIG. 20A is a side view of the second locking layer, in accordance with an embodiment of the present invention.

FIG. 20B is a cross sectional view of the second locking layer shown in FIG. 20A, in accordance with an embodiment of the present invention.

FIG. 21 is a rear view of the second locking layer, in accordance with an embodiment of the present invention.

### DETAILED DESCRIPTION

In the following description, reference is made to the accompanying drawings where, by way of illustration, specific embodiments of the invention are shown. It is to be understood that other embodiments may be used as structural and other changes may be made without departing from the scope of the present invention. Also, the various embodiments and aspects from each of the various embodiments may be used in any suitable combinations. Accordingly, the drawings and detailed description are to be regarded as illustrative in nature and not as restrictive. Like elements in each of the figures are referred to by like reference numbering.

Generally, embodiments of the present invention are directed to a miniature wind turbine having variable blade pitch. The miniature wind turbine includes a rotor having a hub and blades. The blade pitch of the blades can be changed by rotating a blade pitch adjustment layer of the hub, which rotates the blades and simultaneously adjust the pitch of all of the blades present in the hub. The hub can be easily removed from and attached to the wind turbine and the hub can be easily taken apart to modify the number of blades in the hub and the location of the blades in the hub. The easy adjustment of the blade configuration and the blade pitch makes it easy for a user to perform experiments using the wind turbine.

One use for embodiments of the present invention is to provide a miniature wind turbine used for learning purposes. The wind turbine may be conveniently assembled and disassembled and a user can easily change various parameters of the wind turbine, thereby allowing students to learn what factors affect the performance of the wind turbine.

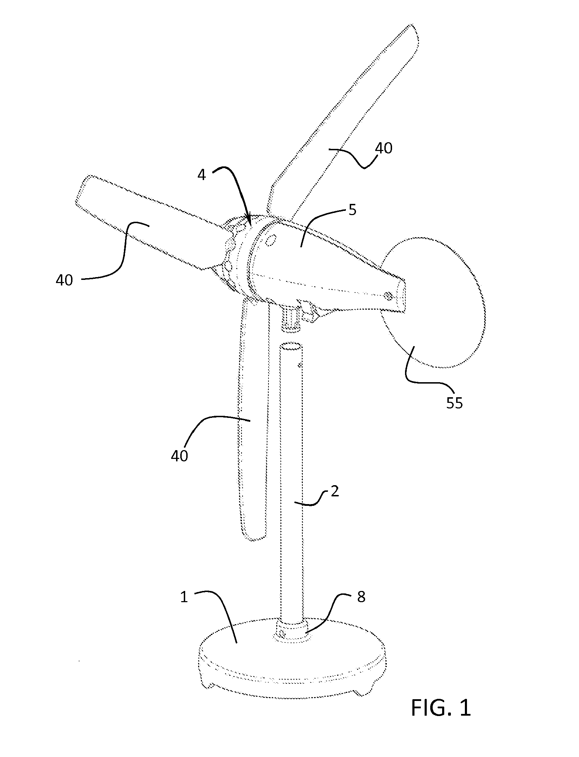

Referring now to the figures, FIG. 1 is a rear perspective view a miniature wind turbine, in accordance with an embodiment of the present invention. The miniature wind turbine includes a base 1, a support 2, a hub 4, rotor blades 40, a nacelle 5, and a vane 55 connected to the nacelle 5. The vane 55 is secured at the tail of the nacelle 5.The vane 55 can assist the nacelle 5, freely rotatable on the support 2, to be automatically directed into the direction of air flow.

Each of the parts of the wind turbine may be made from any suitable material. For example, according to one embodiment, the base 1 is made from a metallic material placed in a plastic shell and is a circular base with adequate weight so that the nacelle 5 can rest stably on the support 2 and the base 1.

Accordingly to one embodiment, the support 2 can be a hollow aluminum post, the lower end of the support 2 is removably and fixedly connected to a support sleeve 8 at the central part of the base 1 an secured in the support sleeve 8 by a fastener such as a plastic rod, screw, rivet or pin or other connector. The upper end of the support 2 may also be removably and fixedly connected with the nacelle 5 by a second fastener, such as a screw, pin or other fastener or connector. The connection between the support 2 and the nacelle 5 and between the support 2 and the base 1 is illustrated and described as one suitable example method of connecting different parts of the wind turbine. Other methods and components used for connecting the different parts of the wind turbine will be readily available to a person of skill in the art, and embodiments of the present inventions are not limited to any one particular connection methods or to the use of any specific type of connection components. Also, while specific material types are described, the various parts of the wind turbine may be made from any suitable material, including metals, alloys, polymers, plastics, and any other suitable material.

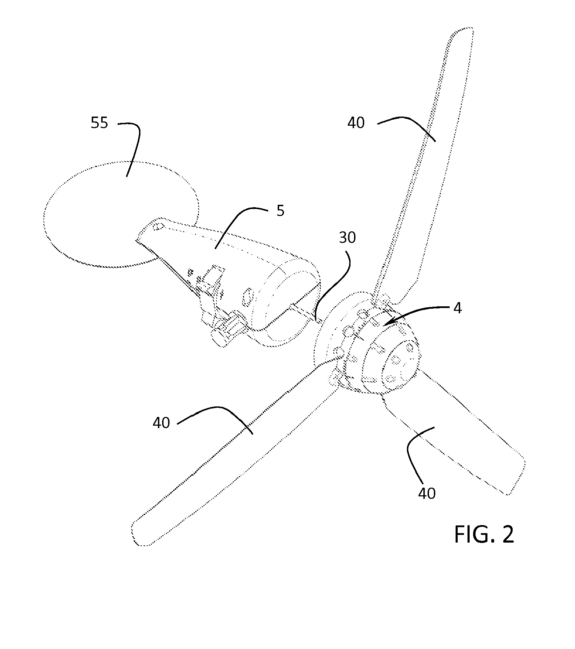

FIG. 2 is a partial exploded perspective view of the wind turbine shown in FIG. 1, in accordance with an embodiment of the present invention. In FIG. 2, the hub 4 is separated from the nacelle 5 showing a shaft 30 that is configured to receive the hub 4, thereby connecting the hub 4 to the nacelle 5. The blades 40 together with the hub 4 comprise a wind turbine rotor.

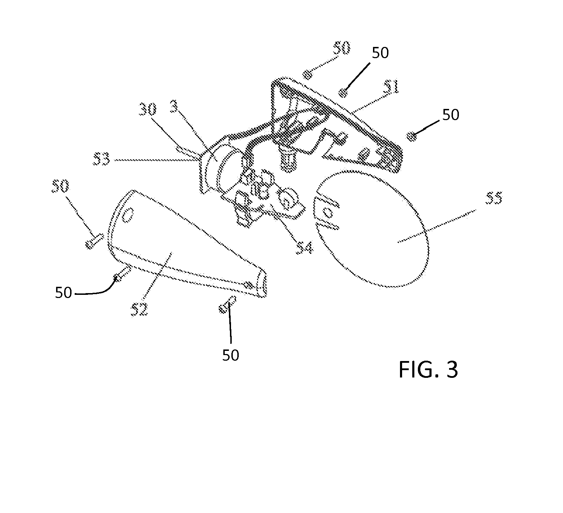

FIG. 3 is an exploded perspective view of the nacelle 5 showing a mounting of the generator, in accordance with an embodiment of the present invention. A generator 3 is mounted in the nacelle 5, the shaft 30 rotatably connected with the generator 3, and the nacelle 5 includes a first shell side 51 and a second shell side 52 which can be joined and secured by connecting pieces 50. A mounting plate 53 for fixedly mounting the generator 3 and a printed circuit board assembly 54 for fixing circuit parts and components are also arranged and secured in the nacelle 5. The mounting plate 53, the printed circuit board assembly 54, the generator 3, and the circuit components on the printed circuit board assembly 54 may be any suitable components or combination of components that are commercially available on the market and capable of performing the function as described and illustrated in the described embodiments. The internal structure illustrated and described is one example configuration of a wind turbine, and any other suitable configuration may be used.

The blade pitch angle is defined as an angle formed between a chord line of the blade 40 and a plane of rotation defined by the rotation of the wind turbine rotor. Accordingly, adjustment of the blade pitch angle can be achieved by adjusting the rotation of the blades 40 relative to the wind turbine hub 4.

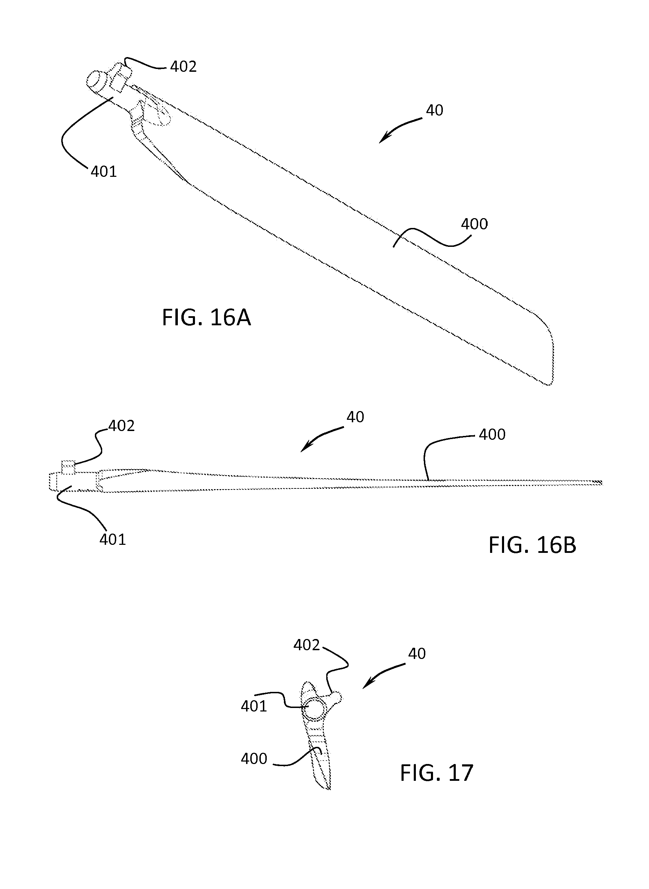

Referring now to FIG. 16, a perspective view of one of the blades 40, in accordance with an embodiment of the present invention, is shown. The blade 40 includes a blade body 400 and a blade root 401. A protrusion 402 is located on the blade root 401 proximate to the end of the blade root 401. The protrusion 402 extends radially from the blade root 401 in a predetermined direction on the front side of the blade 40. However, the protrusion may be located in any desired location on the blade root 401 and in any direction as required by the particular configuration of the hub 4 being used. The protrusion 402 functions as a lever in that movement of the protrusion 402 can generate a corresponding motion in the blade 40. For example, assuming the blade defines a longitudinal axis along the blade, through the blade root 401 to the end of the blade body 400, translation of the protrusion 402 in a direction perpendicularly to the access of the blade root produces a rotational motion in the blade root 401 about the longitudinal axis. Therefore, translation of the protrusion 402 and resorting rotation of the blade root 401, changes the blade pitch of the blade. According to one embodiment, the blade body 400, the blade root 401, and the protrusion 402 are integrally formed such that the blade body 400, the blade root 401, and the protrusion 402 move collectively as a single component. According to another embodiment, one or more of the blade body 400, the blade root 401, and the protrusion 402 may be a separate component fixedly connected with each other such that the blade body 400, the blade root 401, and the protrusion 402 move together collectively. One or more blades are secured in the hub, the blade root 401 of the one or more blades body located between the hub base 41 and the securing layer 420, and the protrusion 402 of each of the blades body is located in one of the slots of the blade pitch angle adjustment layer 421.

According to one embodiment, the protrusion 402 is an L-shaped lever, forming an L-shape with the blade root 401. However, the protrusion 402 may take other suitable shapes and sizes according to the particular application and desired design of the wind turbine rotor. The protrusion 402 may also be located at other positions on the blade root 401 or the blade 40 generally.

According to another embodiment, the blade root 401 may include a gear having one or more teeth. The blade pitch angle adjustment layer 421 may be configured to engage one or more of the teeth such that a rotation of the blade pitch angle adjustment layer 421 generates rotation in the blade root 401. According to this embodiment, each of the one or more teeth may be considered a protrusion that is engaged to generate rotation in the blade 40. Similarly, the blade root may have multiple protrusions configured for engagement with the blade pitch angle adjustment layer 421. Other similar mechanisms may be used to rotate the blade roots and adjust the blade pitch of the blades.

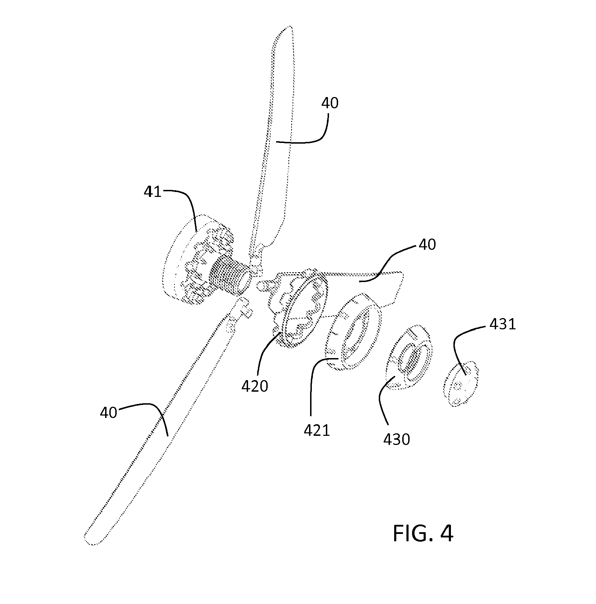

FIG. 4 is an exploded perspective view of the wind turbine rotor, in accordance with an embodiment of the present invention. The wind turbine rotor includes the hub 4 and one or more blades 40. As shown in FIG. 4, the hub 4 includes multiple sections, including a hub base 41, a securing layer 420, a blade pitch adjustment layer 421, a locking layer 430, and a second locking layer 431. According to different embodiments of the invention, the hub 4 may include additional sections or fewer sections than those illustrated and described with reference to FIG. 4 without departing from the present invention.

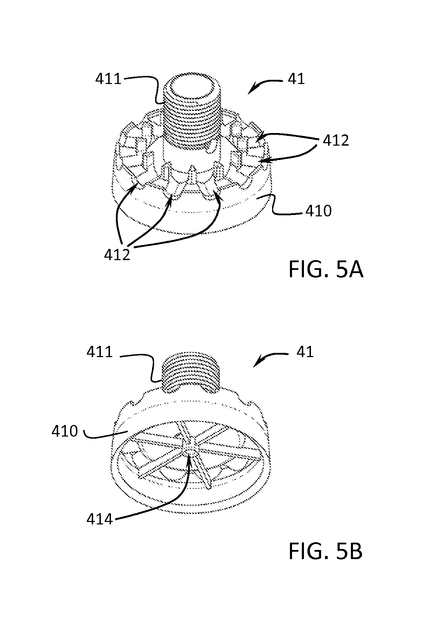

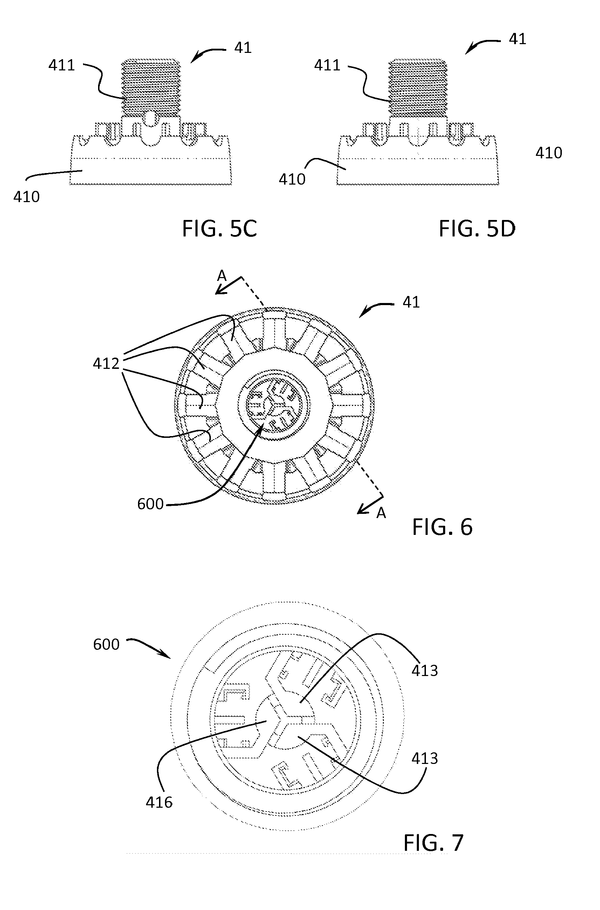

Referring to FIGS. 5 to 10, the hub base 41 is illustrated and described, in accordance with an embodiment of the present invention. The hub base 41 comprises a base rim 410, a column 411, and a plurality of channels 412 configured to receive and hold one or more blades 40. The plurality of channels 412 are radially aligned on the base rim 410. The base rim 410 generally has an annular shape. The rear end of the hub base 41 defines a base opening 414 configured to receive the shaft 30 of the generator 3. Referring specifically to FIGS. 6, 7 and 9, elastic arms 413, 416 that function as a spring 600 are formed on the inner wall of the hub base 41 for engaging the shaft 30. The hub base 41 may be formed by any suitable method out of any suitable material. For example, according to one embodiment, the hub base 41 may be an integrally formed component made by die casting, injection molding, or any other suitable fabrication process. In the illustrated embodiment, the elastic arms 413, 416 may be formed from a separate column connected to the inner wall of the column 411.

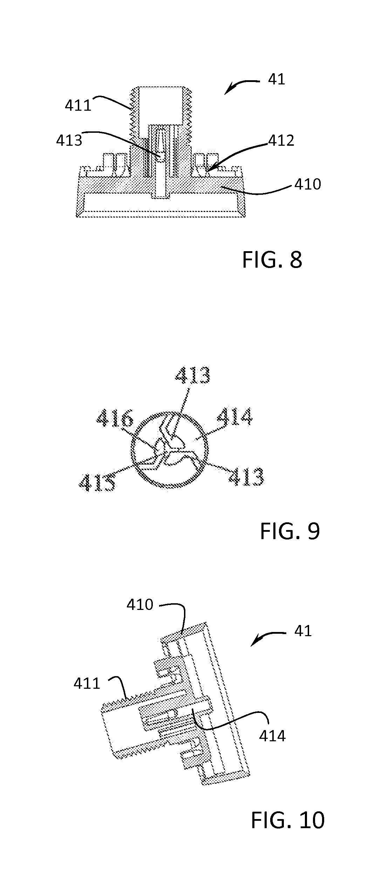

Referring now to FIG. 9, a further enlarged view of the spring 600 shown in FIG. 7, in accordance with an embodiment of the present invention, is shown. The cross section of an end of the shaft 30 may be D-shaped or any other shape having a flattened portion. When the hub is slidably engaged with the shaft 30, one of the elastic arms 416 contacts the flattened portion of the shaft 30. An opening 415 is formed by the elastic arms 413, 416, the diameter of the opening 415 being smaller than that of the end of shaft 30 such that when the shaft 30 is inserted into the opening 415 the spring force of the elastic arms engages the end of the shaft 30, thereby securing the hub 4 to the shaft 30. The engagement of one of the elastic arms 413, 416 against the flat portion of the D-shaped end of the shaft 30 rotationally secures the hub 4 to the shaft 30 so that rotational motion of the hub 4 is transferred into rotational motion of the shaft 30.

The blade pitch adjustment layer 421 is rotationally movable relative to the column 411 and the securing layer 420. The blade pitch adjustment layer 421 may be rotationally movable clockwise and counter-clockwise freely or within a predetermined range of motion. The rotation of the blade pitch adjustment layer 421 can drive the protrusion 402 of two or more blades 40 to rotate the blade roots 401 simultaneously so that the blade pitch angle of each of the two and more blades 40 is the same and adjusted simultaneously. Once the blade pitch adjustment layer 421 is secured in place by the locking layer 430 and/or the second locking layer 431, the blade pitch adjustment layer 421 may not be easily rotated and the blade pitch of the one or more blades in the hub 4 are generally fixed.

Referring now to FIGS, 11 and 12, the securing layer 420 is illustrated and described, in accordance with an embodiment of the present invention. The securing layer 420 has a generally annular shape defining a plurality of channels 423 on the rear surface of the securing layer 420. The plurality of channels 423 on the securing layer 420 are radially aligned and have a size, spacing and alignment that corresponds to the plurality of channels 412 of the hub base 41 such that when the plurality of channels 423 of the securing layer 420 are aligned with the plurality of channels 412 of the hub base 41, a plurality of openings are formed between the hub base 41 and the securing layer 420. Each of the plurality of openings is configured to receive the blade root 401 of the blade 40. In the illustrated embodiments, each of the plurality of openings is generally cylindrically shaped and configured to receive the blade root, which is similarly cylindrical in shape. The size and shape of the blade root 401 is configured to fit securely within each of the plurality of openings formed by the hub base 41 and the securing layer 420, the blade root 401 rotatable within each of the plurality of openings. According to the illustrated embodiment shown in the figures, the hub base 41 and the securing layer 420 each include twelve channels such that a number of different blade combinations may be used in the wind turbine. For example, 2, 3, 4, 6 or 12 blades may be posited within the hub spaced equidistant from each other. However, the blades need not be placed an equal distance from each other, and as part of the learning process, one or more blades will be positioned in any designed locations within the hub 4.

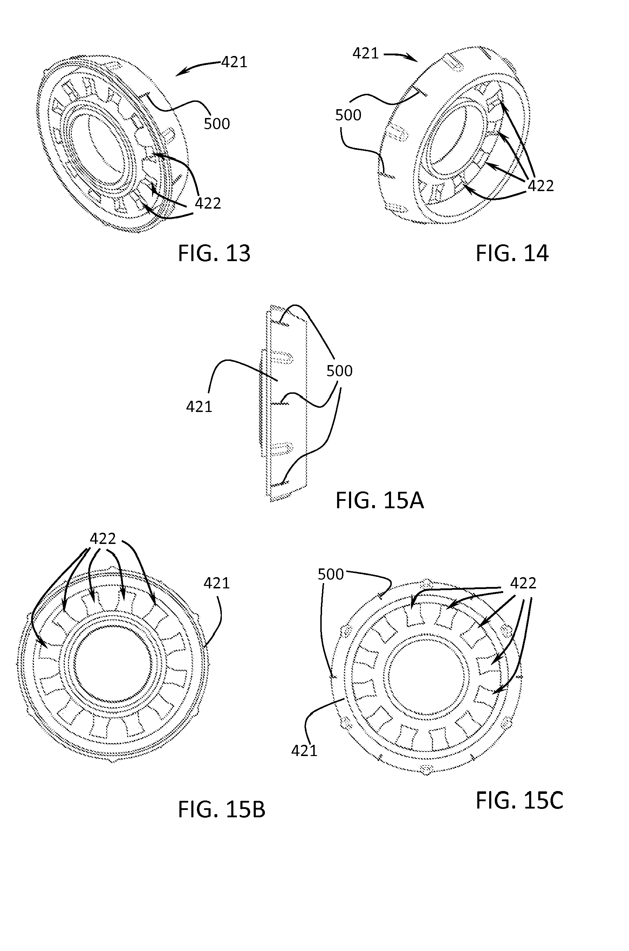

Referring to FIGS. 13 to 15C, the blade pitch adjustment layer is illustrated and described, in accordance with embodiment of the present invention. The blade pitch angle adjustment layer 421 has a generally annular shape, and is positioned on the column 411 of the hub base 41 adjacent to the securing layer 420. A plurality of slots 422 have a radial alignment and spacing that corresponds to the plurality of channels 412, 423 of the hub base 41 and the securing layer 420 such that the protrusion of any blades 40 positioned in the hub 4 are each engaged by a corresponding slot of the adjustment layer 421. A rotation of the blade pitch angle adjustment layer 421 drives the protrusion 402 of each of the blade 40 to rotate, thereby change the blade pitch angle of the blade 40.

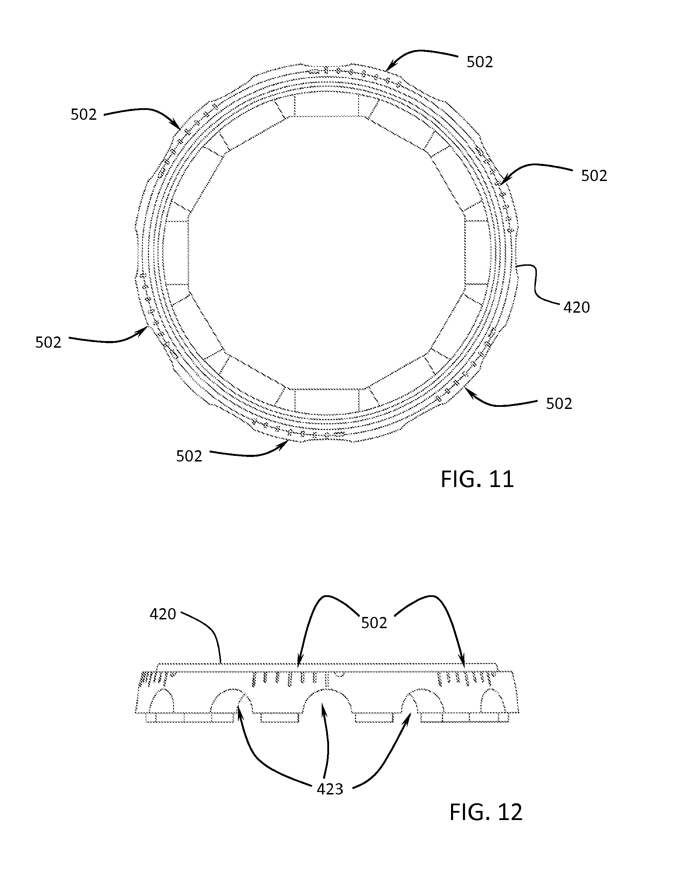

According to one embodiment, the external surface of the blade pitch adjustment layer 421 may include blade pitch indicator markings 500 spaced equidistant from each other. Referring to FIGS. 11 and 12, corresponding blade pitch gradation markings 502 are made on the securing layer 420, allowing the user to read the blade pitch angle based on where one of the blade pitch indicator markings 500 is positioned relative to a corresponding set of blade pitch gradation markings 502 on the securing layer 420. According to one embodiment, the blade pitch angle ranges from 0 to 55 degrees. However, other ranges can be provided according to the configuration of the hub 4 and the blade 40. The adjustment of different angles can cause the wind turbine to output the maximum or increased power or to reduce the speed to reduce the output and protect the generator from damage under strong wind.

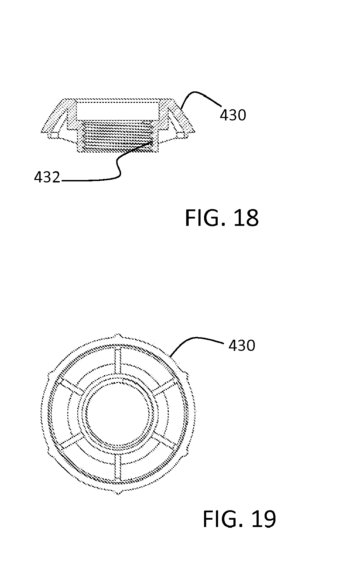

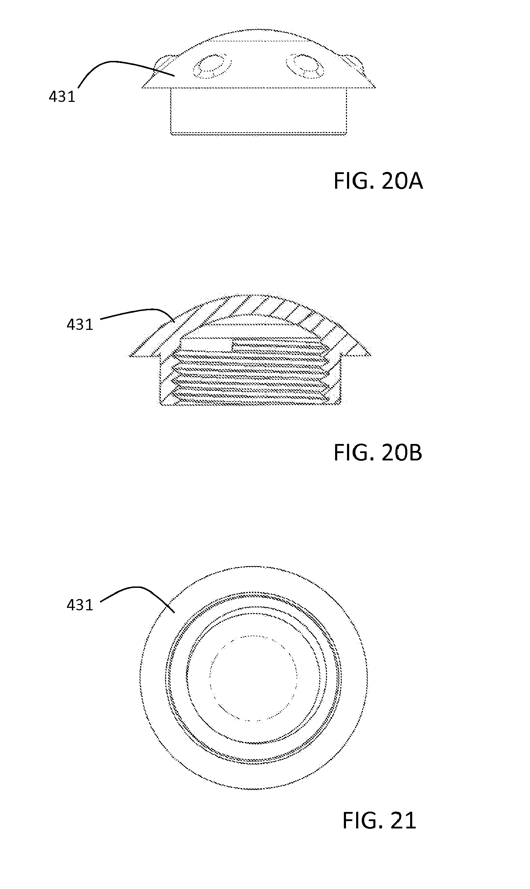

In the illustrated embodiments, the securing layer 420 and the blade pitch adjustment layer 421 are secured on the hub base 41 by the locking layer 430 and the second locking layer 431. The locking layer 430 and the second locking layer 431 together comprise a locking device that secures the blade 40 within the hub 4 and also prevents or minimizes any rotation in the blade pitch adjustment layer 421, so that the blade pitch of the blades in the hub remain fixed during operation of the wind tribune. Referring to FIGS. 18 and 19, the locking layer 430 is an annular body configured for threaded engagement with the column 411 of the hub base 41. An internal thread 432 is formed on an inner annular surface of the locking layer 430, and the internal thread is complementary with a thread formed on the outer annular surface of the column 411. The blade locking layer 430 may be rotated and tightened onto the column 411, thereby connecting the securing layer 420 and the blade pitch adjustment layer 421 to the column 411 and further securing the blades 40 in the hub 4. Referring to FIGS. 20A and 21, the second locking layer 431 helps prevent the locking layer 430 from loosening due to vibration and other motion during operation. The locking layer 430 and the second locking layer 431 function together to provide a double locking configuration. A double locking configuration helps to prevent the hub from losing during operation. However, embodiments of the present invention may use only a single locking layer, such as the locking layer 430, without the second locking layer 431. According to another embodiment of the invention, other methods and components may be used to secure the blades in the hub 4. For example, in one embodiment the locking layer 430 and the second locking layer 431 are not required, and the blade pitch adjustment layer 421 may include a locking mechanism to secure the blade pitch adjustment layer 421 to the hub base 41. Other suitable securing mechanisms may also be used.

An electric fan can be used as the source of the moving air to operate the wind turbine and conduct experiments for wind driven electric power generation. Such experiments can be carried out in laboratories or in primary and secondary schools. Also, since it is relatively easy to remove and attach the wind turbine rotor to the shaft 30 of the nacelle 5, and, according to one embodiment, no fasteners such as screws, bolts, nuts, rivets, or tools, are required to secure the rotor to the shaft 30, repeated adjustments to the configuration of the rotor can be made easily. While not illustrated in the figures, an electrical measurement device, such as a voltmeter, oscilloscope, or ammeter, may be connected to the generator of the wind turbine to measure the amount of power being generated. These measurements can be used to determine the efficiency of the specific parameters being used.

Additionally simultaneous adjustment of the blade pitch angle of multiple blades helps ensure that the different blades all have the same parameters, allowing the experiments to be carried out in a controllable environment with a high degree of certainty and consistency.

While the invention has been particularly shown and described with reference to the illustrated embodiments, those skilled in the art will understand that changes in form and detail may be made without departing from the spirit and scope of the invention. For example, while certain materials and components have been illustrated and described, other suitable materials and components may be used. Also, while the hub 4 is illustrated and described in a specific configuration, the number of sections used in the hub and the number of channels provided may be changed according to varying design requirements or manufacturing decisions.

Accordingly, the above description is intended to provide example embodiments of the present invention, and the scope of the present invention is not to be limited by the specific examples provided.

## Claims

1. A wind turbine rotor having variable blade pitch, the wind turbine rotor comprising:
a hub defining a predetermined number of openings, the hub further including a rotatable adjustment layer defining a predetermined number of slots, wherein the slots corresponds to the openings; and
one or more blades secured in the hub, each of the one or more blades including a blade root, and a protrusion extending from the blade root, each of the one or more blades defining a longitudinal axis along each of the one or more blades, wherein the blade root of each of the one or more blades is secured in a corresponding one of the openings, the blade root rotatable within the corresponding one of the openings, and wherein the protrusion of each of the one or more blades is engaged by a corresponding slot of the adjustment layer, wherein rotation of the adjustment layer translates the protrusions of each of the one or more blades, thereby rotating each of the one or more blades about the longitudinal axis.

2. The wind turbine rotor of claim 1, wherein the one or more blades are removably secured in the hub.

3. The wind turbine rotor of claims 1 or 2, wherein the hub includes a base opening and a spring configured to receive a generator shaft, the generator shaft including a flat portion, and wherein the spring includes an arm configured to engage the flat portion of the generator shaft and rotationally secure the hub to the generator shaft.

4. The wind turbine rotor of claim 3, wherein the spring includes elastic arms configured to apply a spring force to the generator shaft.

5. The wind turbine rotor of any of claims 1-4, wherein the hub includes a hub base having a column and a base rim, a securing layer positioned on the column of the hub base, and wherein the adjustment layer is positioned on the column of the hub base and rotatable relative to the hub base, the adjustment layer proximate to the securing layer, and the adjustment layer defining the predetermined number of slots along a perimeter of the adjustment layer, and wherein the predetermined number of openings are defined between the hub base and the securing layer such that the securing layer may be moved relative to the hub base to permit the insertion of additional blades or the removal of at least some of the one or more blades secured in the hub.

6. A wind turbine rotor of any of claims 1-5 having variable blade pitch
wherein a blade pitch adjustment layer is positioned on the column of the hub base and rotatable relative to the hub base, the blade pitch adjustment layer defining a plurality of slots along a perimeter of the blade pitch adjustment layer..

7. The wind turbine rotor of claims 5 or 6, further comprising a locking layer, the locking layer configured for threaded engagement with the column, wherein the locking layer secures the securing layer and the blade pitch adjustment layer on the column of the hub base.

8. The wind turbine rotor of claim 7, further comprising a first locking layer and a second locking layer, the first locking layer configured for threaded engagement with the column, wherein the first locking layer secures the securing layer and the blade pitch adjustment layer on the column of the hub base, and the second locking layer is configured for threaded engagement with the column, wherein the second locking layer secures the first locking layer to the column.

9. The wind turbine rotor of any of claims 6-8, wherein the blade pitch adjustment layer includes an indicator marking and the securing layer includes gradation markings corresponding to the indicator markings, such that the indicator markings and the gradation markings cooperate to indicate the blade pitch angle of the blades as the blade pitch adjustment layer is rotated relative to the securing layer.

10. A wind turbine rotor hub having variable blade pitch control, the wind turbine rotor hub configured to receive one or more blades, each of the one or more blades having a protrusion located proximate to an end of the one or more blades, the hub comprising:
a hub base having a column and a base rim;
a securing layer positioned on the column of the hub base;
a blade pitch adjustment layer positioned on the column of the hub base and rotatable relative to the hub base, the blade pitch adjustment layer defining a plurality of slots along a perimeter of the blade pitch adjustment layer;
a locking layer configured to secure the blade pitch adjustment layer to the hub base, wherein the securing of the blade pitch adjustment layer restricts the rotation motion of the blade pitch adjustment layer; and
wherein the hub base and the securing layer together define a predetermined number of openings configured to receive a part of one of the one or more blades, and wherein the blade pitch adjustment layer is configured to engage the protrusion of each of the one or more blades when the part of each of the one or more blades is positioned in one of the predetermined openings.

11. The wind turbine rotor hub of claim 10, wherein rotation of the blade pitch adjustment layer is configured to translate each of the protrusions of the one or more blades, when the part of each of the one or more blades is positioned in one of the predetermined openings, thereby rotating each of the one or more blades about a longitudinal axis of each of the one or more blades.

12. The wind turbine rotor hub of claims 10 or 11, wherein the end of the one or more blades is a blade root and each of the predetermined number openings is configured to receive the blade root of one of the one or more blades, and the securing of the blade pitch adjustment layer is configured to restrict motion of the blade root when positioned in one of the predetermined number of openings.

13. The wind turbine rotor hub of any of claims 10-12, wherein the hub base includes a base opening and a spring configured to receive the wind turbine generator shaft, the wind turbine generator shaft including a flat portion, and wherein the spring includes an arm configured to engage the flat portion of the wind turbine generator shaft.

14. The wind turbine rotor hub of claim 13, wherein the spring includes elastic arms configured to apply a spring force to the generator shaft.

15. The wind turbine rotor hub of any of claims 10-14, wherein the locking layer is configured for threaded engagement with the column, wherein the locking layer may be rotated to engage the column and secure the securing layer and the blade pitch adjustment layer to the column of the hub base.
